# EUROPÄISCHE PATENTSCHRIFT

(11) **EP 1 223 103 B1**
(45) Veröffentlichungstag und Bekanntmachung des Hinweises auf die Patenterteilung: **04.05.2005**
(21) Anmeldenummer: 02000686.2
(22) Anmeldetag: 11.01.2002
(51) Int. Cl.: B64D 13/00, B60H 1/34

(54) **Luftauslassvorrichtung für ein Fahrzeug, insbesondere für ein Flugzeug**
Air outlet device for a vehicle, in particular for an aircraft
Dispositif de sortie d'air pour un véhicule, notamment pour un aéronef

(30) Priorität: 11.01.2001 DE 10101232
(43) Veröffentlichungstag der Anmeldung: 17.07.2002
(73) Patentinhaber: Goodrich Hella Aerospace Lighting Systems GmbH, 59557 Lippstadt (DE)
(72) Erfinder: Thomassin, Stefan, Dipl.-Ing., 59555 Lippstadt (DE); Pöhlau, Frank, Dipl.-Ing., 90482 Nürnberg (DE); Kurz, Klaus, Dipl.-Ing., 91522 Ansbach (DE)
(74) Vertreter: Hilleringmann, Jochen, Dipl.-Ing.

(56) Entgegenhaltungen:
- DE-B- 1 218 892
- US-A- 5 399 119

## Beschreibung

Die Erfindung betrifft eine Luftauslassvorrichtung für ein Fahrzeug.

In Fahrzeugen, und zwar insbesondere in Flugzeugen und Bussen ist es üblich, dass sich jeder Passagier individuell einen kühlenden Luftstrom mittels einer Luftauslassdüse einstellen kann, die in der Decke oberhalb des Sitzplatzes angeordnet ist. Derartige Luftauslassvorrichtungen (auch Luftduschen genannt) weisen einen Düsenkörper auf, der wahlweise verschließbar und räumlich unterschiedlich einstellbar ist, wodurch der austretende Luftstrom entsprechend ausgerichtet werden kann.

Eine Luftauslassvorrichtung der vorstehend genannten Art ist beispielsweise aus US-A-5,399,119 bekannt. Diese Luftauslassvorrichtung ist mit einem Düsenkörper versehen, der eine Lufteinlassöffnung und eine Luftauslassöffnung aufweist. In dem Düsenkörper ist ein koaxialer Ventilkörper angeordnet, der bei Drehung des Düsenkörpers zwischen einer die Luftauslassöffnung versperrenden Schließposition und einer von mehreren möglichen die Lufteinlassöffnung mehr oder weniger freigebenden Öffnungspositionen verschiebbar ist. Der Düsenkörper ist an einem Halteelement drehbar gelagert, welches seinerseits in einer Aufnahme in einem Deckenpaneel oberhalb des Sitzplatzes gelagert ist.

Insbesondere im Flugzeugbau ist zur Einsparung von Gewicht eine leichtgewichtige und dennoch stabile Konstruktion der einzelnen Komponenten erwünscht. Die bekannte Luftauslassvorrichtung weist einen recht materialintensiven und damit schwergewichtigen Aufbau auf. Ferner weist die bekannte Luftauslassvorrichtung ein im Durchmesser recht kleines Betätigungsteil des Düsenkörpers auf, da das Bedienteil des Düsenkörpers von innen in das Halteelement eingesetzt ist und durch eine Aufnahmeöffnung aus diesem herausragt. Damit kann das Betätigungsteil lediglich einen Außendurchmesser aufweisen, der gleich dem Durchmesser der Aufnahmeöffnung ist und insbesondere nicht größer als der Aufnahmeöffnungsdurchmesser sein kann. Ferner ist bei Luftauslassvorrichtungen der hier in Rede stehenden Art und damit auch bei der bekannten Luftauslassvorrichtung der Ventilkörper sichtbar, was die Designfreiheiten im Hinblick auf die farbliche Anpassung des Ventilkörpers an die Innenraumausstattung einschränkt. Schließlich ist auch zu bedenken, dass die austretende Luftströmung beim Passieren des Düsenkörpers Strömungsgeräusche verursachen kann. Zur Komfortsteigerung ist es daher wünschenswert, derartige Geräuschquellen so weit wie möglich zu unterdrücken.

Es besteht also bei Luftauslassvorrichtungen der vorstehend genannten Art das Bedürfnis nach Verbesserungen in vielerlei Hinsicht, wie es oben angegeben ist.

Gemäß einem ersten Aspekt der Erfindung wird eine Luftauslassvorrichtung für ein Fahrzeug vorgeschlagen, wobei die Luftauslassvorrichtung die Merkmale des Anspruchs 1 aufweist.

Die erfindungsgemäße Luftauslassvorrichtung verfügt zur Gewichtseinsparung über einen Ventilkörper, der hohl ausgebildet ist. Ferner ist der Ventilkörper zweiteilig ausgeführt, und zwar dergestalt, dass der Ventilkörper an seinem der Lufteinlassöffnung des Düsenkörpers zugewandten Ende geschlossen und an dem der Luftauslassöffnung zugewandten Verschließende offen ist. Ein derartiger Ventilkörper weist demzufolge eine domartige hohle Ausgestaltung auf, die sich beispielsweise in Spritzgusstechnik auf einfache Weise herstellen lässt. Das offene Verschließende lässt sich mittels eines Abdeckteils, das das zweite Teil der zweiteiligen Ausgestaltung des Ventilkörpers bildet, verschließen. Dieses Abdeckteil, das nach Art eines (Verschluss-)Stopfens ausgebildet sein kann, kann farblich unterschiedlich zum Ventilkörper ausgebildet sein. Damit sind Designanpassungen des Ventilkörpers an die Fahrzeuginnenraumausstattung möglich.

In vorteilhafter Ausgestaltung der Erfindung steht der Ventilkörper mit dem Halteelement über ein Kopplungsteil in Führungseingriff. Bei diesem Führungeingriff kann es sich beispielsweise um einen Gewindeeingriff handeln, wobei das Kopplungsteil dann ein Außengewinde aufweist, das mit einem Innengewinde des Halteelements zusammenwirkt. Das Kopplungsteil weist zu diesem Zweck einen umlaufenden Ring auf, dessen Außenseite das Gewinde aufweist. Das Innengewinde des Halteelements ist aus Gründen der Gewichtsersparnis vorteilhafterweise segmentiert, d.h. es erstreckt sich nicht über 360°. Vielmehr weist das Halteelement einzelne nach innen vorstehende Teilabschnitte auf, die an ihrer nach innen weisenden Innenseite eine Gewindestruktur aufweisen.

Das Kopplungsteil des Ventilkörpers wird bei Drehung des Düsenkörpers mitgenommen und somit in Drehung versetzt. Damit dreht sich also der Ventilkörper, wenn dieser axial im Düsenkörper bei Drehung desselben verschoben wird. Zu diesem Zweck weist der Düsenkörper Aufnahmeschlitze auf, die sich radial durch die Düsenkörperwandung erstrecken und zum Lufteinlassende des Düsenkörpers hin offen sind. Das Kopplungsteil des Ventilkörpers ist in einem solchen Fall mit speichenartigen Stegen versehen, die in die Aufnahmeschlitze des Düsenkörpers eingetaucht sind. Diese Stege verschieben sich innerhalb der Schlitze axial, wenn der Düsenkörper gedreht wird und sich damit der Ventilkörper verschiebt.

Die Stege sind, wie auch der Ventilkörper der Luftströmung ausgesetzt. Von Vorteil in Bezug auf die Unterdrückung von Strömungsräuschen und die Verringerung des Strömungswiderstandes ist es, wenn die Stege (und der Ventilkörper) stromlinienförmig, also unter aerodynamischen Aspekten geformt ausgebildet sind. Insoweit zweckmäßig ist es, wenn die Stege bei Betrachtung des Querschnitts in einer quer zur Radialerstreckung der Stege und zur Längsachse des Düsen- bzw. Ventilkörpers parallelen Ebene eine Tropfenform aufweisen. Hierbei verjüngen sich die Stege zu ihren der Luftauslassöffnung zugewandten Rändern.

Zweckmäßig ist es, den Ventilkörper und das Kopplungsteil einstückig insbesondere als (Kunststoff-)Spritzgussteil auszubilden.

Eine Alternative zu dem zuvor beschriebenen Gewindeeingriff zwischen Kopplungsteil und Halteelement besteht darin, dass das Kopplungsteil des Ventilkörpers in axialen Führungsnuten des Halteelements geführt ist und dass die axiale Verschiebung des Ventilkörpers durch nach Art eines Gewindes ansteigend verlaufenden Schlitzen in der Wandung des Düsenkörpers erfolgt. Auch in diesem Fall ist es selbstverständlich möglich, den Ventilkörper und das Kopplungsteil einstückig als beispielsweise Spritzgussteil aus Kunststoff o.dgl. auszubilden.

Die Ausbildung des Ventilkörpers als (Kunststoff-)Spritzgussteil bedingt, dass an dem Ventilkörper sich ein Angussansatz bildet. Dieser Angussansatz beeinträchtigt die Homogenität der Oberfläche des Ventilkörpers, was sich wiederum strömungstechnisch durch eine Geräuschentwicklung auswirkt. Zweckmäßigerweise ist dieser Angussansatz in einer muldenartigen sphärischen Vertiefung an dem der Lufteinlassöffnung des Düsenkörpers zugewandten, von der Luftströmung angeströmten Ende des Ventilkörpers untergebracht. Darüber hinaus ist es strömungstechnisch und insbesondere im Hinblick auf die Unterdrückung von Geräuschentwicklungen von Vorteil, wenn das von der Luftströmung angeströmte Ende des Ventilkörpers abgerundet, d.h. im wesentlichen nach Art einer Halbkugel ausgebildet ist. Die muldenartige Vertiefung befindet sich dann zweckmäßigerweise im Bereich des Scheitelpunktes des abgerundeten Endes des Ventilkörpers.

Bereits oben wurde im Zusammenhang mit dem Führungseingriff von Kopplungsteil und Halteelement auf den Vorteil des segmentierten Innengewindes des Halteelements durch Ausbildung von in Umfangserstreckung voneinander beabstandeten Teilsegmenten hingewiesen. Neben dem Aspekt der Gewichtsersparnis resultiert aus dem segmentierten Innengewinde auch eine vereinfachte Herstellung des Halteelements als (Kunststoff-)Spritzgussteil. So erhöht sich die Güte der Außenfläche des Halteelements, ohne dass es dazu einer mechanischen Nachbearbeitung wie beispielsweise eines Polierens bedarf. Übermäßige Materialanhäufungen an der Innenseite des Halteelements werden durch die im wesentlichen hohlkugelförmige Ausbildung des Halteelements und das in dieser angeordnete Teilsegment-Innengewinde vermieden, was die Schwindung des spritzgegossenen Halteelements verringert. Die verbesserte Oberflächengüte des Halteelements ist im Hinblick auf den luftdichten Einsatz des Halteelements in einer entsprechenden Aufnahme im Deckenpaneel von Vorteil. Hierbei ist noch anzumerken, dass die Halteelemente bekannter Luftauslassvorrichtungen kugelförmig ausgebildet sind, wodurch sich bei Anordnung dieses kugelförmigen Halteelements in der Aufnahme eine Kugelgelenkanordnung ergibt, die die individuelle Ausrichtung des Düsenkörpers innerhalb eines Raumwinkelbereichs erlaubt. Für die luftdichte Unterbringung des kugelförmigen Halteelements in der Aufnahme ist eine gleichmäßig runde Oberfläche des Halteelements erforderlich, was durch die Ausbildung des Innengewindes in Form von Teilsegmenten, wie oben dargelegt, unterstütz wird. Gemäß einem weiteren Aspekt der erfindungsgemäßen Luftauslassvorrichtung weist der Düsenkörper ein sich bis außerhalb des Halteelements erstreckendes, manuell drehbares Betätigungsteil und ein innerhalb des Halteelements angeordnetes, mit dem Betätigungsteil zur gemeinsamen Verdrehung mit diesem verbundenes Hülsenteil auf. Das Betätigungsteil und das Hülsenteil umgreifen dabei den Rand der Aufnahmeöffnung des Halteelements, an der der Düsenkörper drehbar gelagert ist. Dadurch, dass der Düsenkörper zweiteilig ausgebildet ist (Betätigungsteil und Hülsenteil), ist es möglich, diese beiden Teile von entgegengesetzten Seiten aus in das Halteelement einzuführen. Das Betätigungsteil kann daher insbesondere in seinem Außendurchmesser größer ausgebildet sein als der Durchmesser der Aufnahmeöffnung, da das Betätigungsteil nicht mehr, wie bei der bekannten Luftauslassvorrichtung nach US-A-5,399,119 vorgesehen, durch die zentrale Durchgangsaussparung in die Aufnahmeöffnung eingesetzt wird, sondern von außen gegen das Halteelement bewegt wird. Das Betätigungsteil verbleibt dabei außerhalb des Halteelements und kann demzufolge in seinem Außendurchmesser größer gewählt werden als der Durchmesser der Aufnahmeöffnung des Halteelements.

Zweckmäßigerweise ist das Betätigungsteil mit einem sich an den Betätigungsabschnitt anschließenden Kragenabschnitt versehen, dessen Außendurchmesser gleich dem bzw. geringfügig kleiner als der Durchmesser der Aufnahmeöffnung ist. Das Hülsenteil wird dann bei in das Halteelement eingesetztem Kragenabschnitt auf diesen aufgesteckt. Der Kragenabschnitt bildet dabei einen Teil der Innenseite des Düsenkörpers und damit einen Teil der Innenseite des Luftkanals durch das Halteelement. Der zweite Teil des Luftkanals wird von dem Hülsenteil gebildet, sofern dieses, was vorteilhaft ist, über den Kragenabschnitt in Richtung auf die Lufteinlassöffnung des Düsenkörpers übersteht. Dieses Hülsenteil ist dann beispielsweise mit den oben bereits angesprochenen Aufnahmeschlitzen für das Kopplungsteil des Ventilkörpers ausgestattet.

In jedem Fall ergibt sich bei der oben beschriebenen zweiteiligen Ausgestaltung des Düsenkörpers eine zylindrische Innenseite desselben, die im wesentlichen übergangsfrei ist, also im wesentlichen keine Unstetigkeiten aufweist. Damit ergibt sich eine glatte Innenseite, was wiederum strömungstechnisch sowohl im Hinblick auf den Widerstand als auch auf die Unterdrückung der Geräuschentwicklung von Vorteil ist.

Durch die zuvor beschriebene zweiteilige Ausführung des Düsenkörpers kann eine eindeutige Funktionstrennung zwischen der Bedienung des Düsenkörpers und der Luftströmungsführung durch den Düsenkörper erzielt werden. Der Betätigungsabschnitt, an dem der Düsenkörper zur Einstellung der Axialposition des Ventilkörpers manuell verdreht wird, überragt die Aufnahmeöffnung des Halteelements radial und verdeckt damit den Aufnahmerand und somit auch einen sich eventuell zwischen dem Düsenkörper und dem Halteelement bildenden Ringspalt. Durch die größere Radialdimensionierung ist der Betätigungsabschnitt manuell besser greifbar und bedienbar (drehbar).

Durch die zweiteilige Ausgestaltung des Düsenkörpers lässt sich dieser, wie bereits oben im Zusammenhang mit dem Verschließende des Ventilkörpers beschrieben, an das Design der die Luftauslassvorrichtung umgebenden Oberfläche der Innenausstattung des Fahrzeuges anpassen, ohne dass der gesamte Düsenkörper aus diesem designangepassten und damit eventuell teureren Material bestehen muss.

Die Erfindung wird nachfolgend anhand eines in der Zeichnung wiedergegebenen Ausführungsbeispiels näher erläutert. Im einzelnen zeigen:
- Fig. 1: eine Seitenansicht der Luftauslassvorrichtung zur Belüftung eines Sitzplatzes in einem Fahrzeug, wie beispielsweise einem Flugzeug oder Bus, mit angedeutetem Deckenpaneel,
- Fig. 2: einen Schnitt entlang der Linie II-II der Fig. 1,
- Fig. 3: einen Schnitt entlang der Linie III-III der Fig. 2 und
- Fig. 4: die Einzelteile der Luftauslassvorrichtung gemäß den Fign. 1 bis 3 in Explosionsdarstellung.

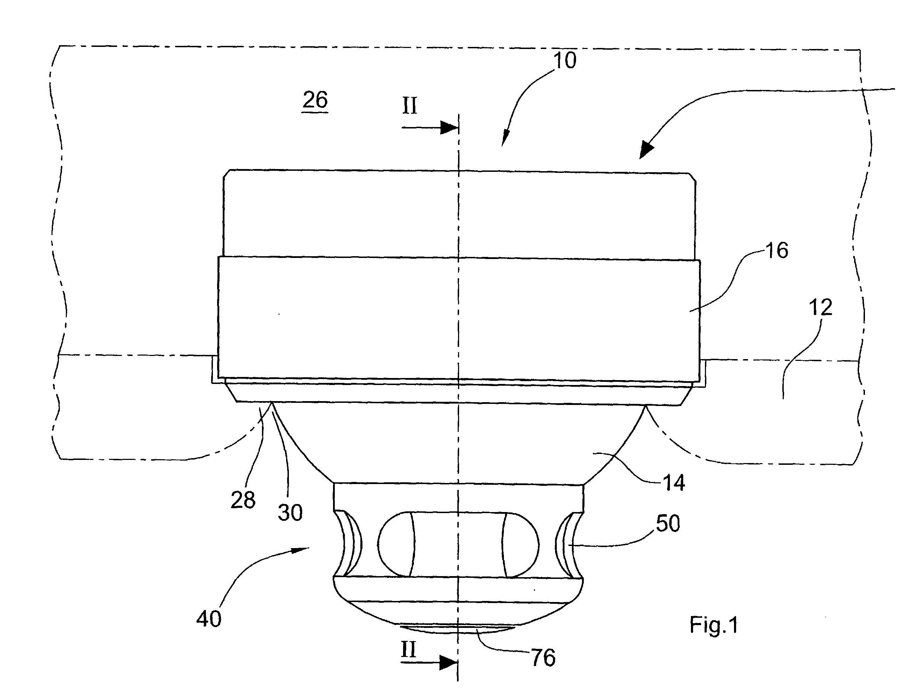

In den Fign. 1 bis 4 ist der Aufbau einer Luftauslassvorrichtung 10 sowie das Zusammenspiel der einzelnen Komponenten dieser Luftauslassvorrichtung 10 dargestellt. Gemäß Fig. 1 ist die Luftauslassvorrichtung 10 in der Deckenverkleidung 12 oberhalb eines Fahrgastsitzes in beispielsweise einem Flugzeug oder Bus angeordnet. Durch manuelle Betätigung der Luftauslassvorrichtung 10 lässt sich die Intensität und Richtung einer Luftströmung verändern.

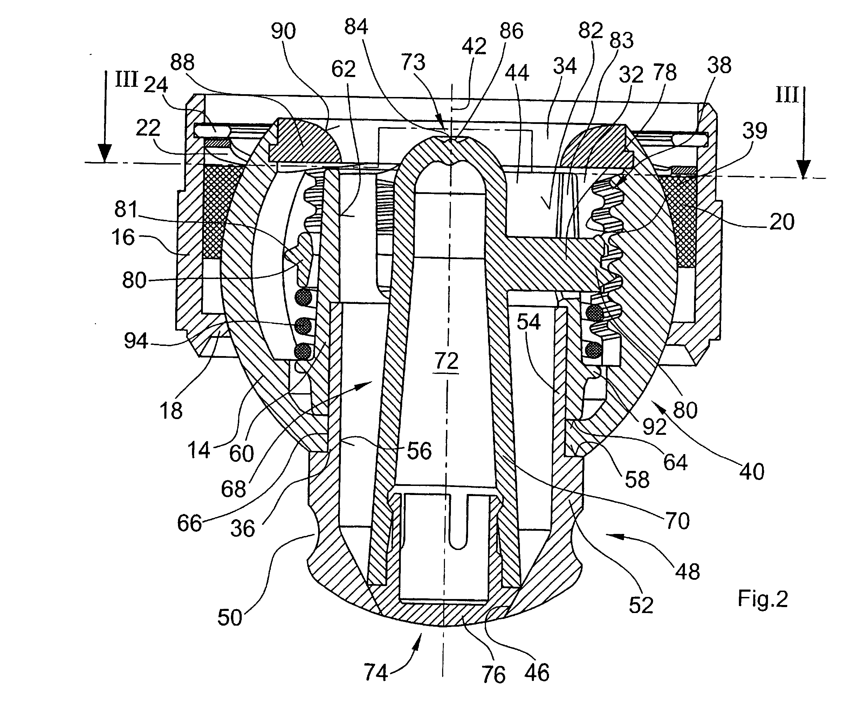

Die Luftauslassvorrichtung 10 weist ein kugelförmiges Halteelement 14 auf, das innerhalb eines Raumwinkels, der bezüglicher seiner Größe konstruktiv bedingt ist, schwenkbar in einem zylindrischen Aufnahmeelement 16 gelagert ist. Dieses Aufnahmeelement 16 ist nach Art einer Hülse aufgebaut und weist an seinem auf der Deckenverkleidung 12 aufliegenden Ende einen Innenflansch 18 (siehe Fig. 2) auf, der an der sphärischen Außenseite des kugelförmigen Halteelements 14 anliegt. Von dem diesem Innenflansch 18 gegenüberliegenden Ende des Aufnahmeelements 16 ist in dieses ein Lagerelement 20 eingesetzt, dessen an dem Aufnahmeelement 16 anliegenden Außenseite zylindrisch und dessen an dem Halteelement 14 anliegenden Seite sphärisch konkav ausgebildet ist. Dieses Lagerelement 20 dient nicht nur der Lagerung des kugelförmigen Halte-elements 14 sondern auch dem luftdichten Abschluss des Zwischenraums zwischen Aufnahmeelement 16 und Halteelement 14. Das Lagerelement 20 ist in seiner Einbauposition gemäß Fig. 2 durch einen gewellten Federring 22 vorgespannt, der sich einerseits an dem Lagerelement 20 und andererseits an einem Aufnahmeelement 16 gesicherten Sicherungsring 24 abstützt.

Wie in Fig. 1 gezeigt, befindet sich das Lagerelement 16 in einer mit Druckluft versorgten Kammer bzw. einem Schacht 26 und liegt an seinem mit dem Innenflansch 18 versehenen Ende dichtend an dem Rand 28 einer Öffnung 30 der Deckenverkleidung 12 an. Aus der Öffnung 30 ragt somit ein Teil des kugelförmigen Halteelements 14 sowie ein Betätigungsteil zur Einstellung der Intensität und Richtung der Luftströmung heraus.

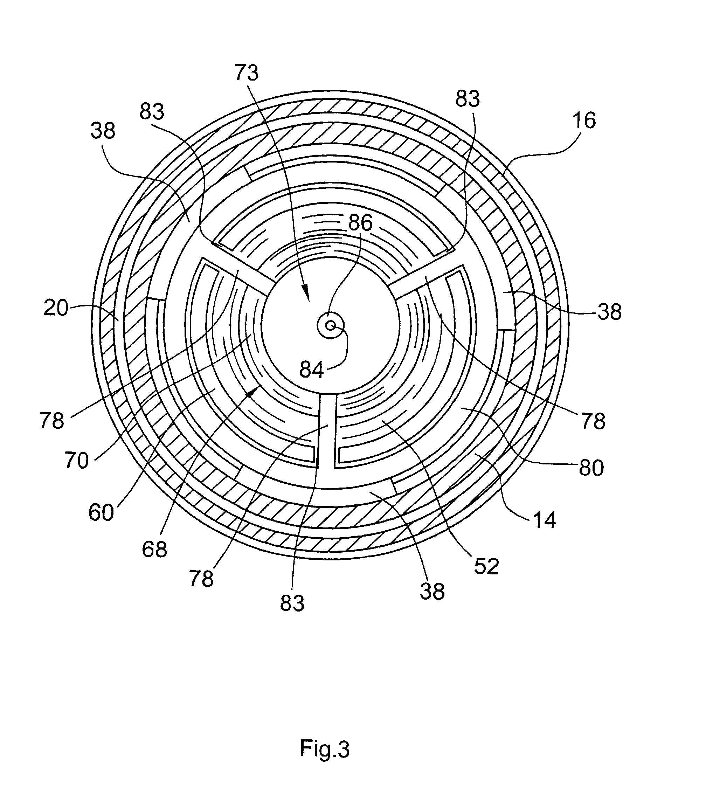

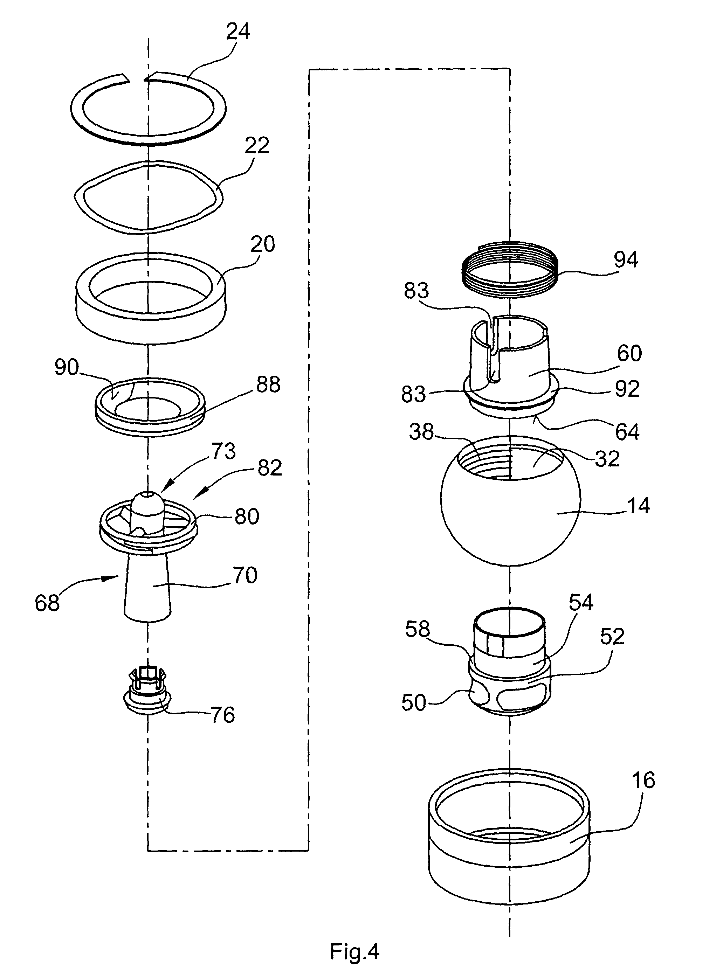

Wie anhand der Fign. 2 und 4 zu erkennen ist, weist das kugelförmige Halteelement 14 eine kugelförmig gebildete Wandung und eine zentrale Durchgangsöffnung 32 auf, die sich von einer ersten Öffnung 34 bis zu einer (zweiten) Aufnahmeöffnung 36 erstreckt. An der Innenseite der Durchgangsöffnung 32 befinden sich drei um 60° gegeneinander in Umfangsrichtung versetzt angeordnete Gewindeteilsegmente 38 (siehe insbesondere Fig. 3), die zusammen ein Innengewinde 39 bilden. In der Aufnahmeöffnung 36 des Halteelements 14 ist ein Düsenkörper 40 um die Mittelachse 42 der Durchgangsöffnung 32 des Halteelements 14 drehbar gelagert. Dieser Düsenkörper 40 weist eine Lufteinlassöffnung 44 und eine Luftauslassöffnung 46 auf. Der Düsenkörper 40 ist zweiteilig ausgeführt und umfasst ein Betätigungsteil 48, das aus der Aufnahmeöffnung 36 des Halteelements 14 herausragt und weist in seiner zylindrischen Außenseite Griffmulden 50 zum besseren Ergreifen des Düsenkörpers 40 mit der Hand zwecks Drehung desselben auf. In dem Betätigungsteil 48 befindet sich die Luftauslassöffnung 46 des Düsenkörpers 40, der konzentrisch zur Mittelachse 42 der Durchgangsöffnung 32 des Halteelements 14 angeordnet ist.

Das Betätigungsteil 48 ist mit einem die Griffmulden 50 aufweisenden Betätigungsabschnitt 52 und einem von diesem in das Halteelement 14 vorstehenden Kragenabschnitt 54 versehen. Während die Innenseite 56 des Betätigungsteils 48 innerhalb des Kragenabschnitts 54 und des sich daran anschließenden Teils des Betätigungsabschnitt 52 zylindrisch ausgebildet ist, befindet sich an der Außenseite zwischen Betätigungsabschnitt 52 und Kragenabschnitt 54 eine Schulter- bzw. Radialfläche 58. Auf den Kragenabschnitt 54 aufgesteckt ist ein Hülsenteil 60 des Düsenkörpers 40, dessen zylindrische Innenseite 62 in die zylindrische Innenseite 56 des Betätigungsteils 48 übergeht. Hülsenteil 60 und Betätigungsteil 48 sind miteinander verklebt. Beide zusammen bilden den Luftführungskanal innerhalb des Düsenkörpers 40.

Das Hülsenteil 60 ist von der Schulterfläche 58 des Betätigungsteils 48 beabstandet. Zwischen der Schulterfläche 58 und der dieser gegenüberliegenden Stirnfläche 64 des Hülsenteils 60 entsteht also in der Außenseite des Düsenkörpers 40 eine Aufnahmenut 66, in die der Rand der Aufnahmeöffnung 36 des Halteelements 14 eingetaucht ist. Auf diese Weise ist der Düsenkörper 40 drehbar am Halteelement 14 gelagert.

Innerhalb des Düsenkörpers 40 befindet sich ein Ventilkörper 68, der eine kegelstumpf- bzw. domartige Wandung 70 und der einen von der Wandung 70 begrenzten Hohlraum 72 aufweist. Der Ventilkörper 68 weist ein der Lufteinlassöffnung 44 des Düsenkörpers 40 zugewandtes geschlossenes Ende 73 und ein der Luftauslassöffnung 46 des Düsenkörpers 40 zugewandtes offenes Ende 74 auf. In das offene Ende 74 ist ein Abdeckteil 76 mittels einer Schnappverbindung oder stoffschlüssig eingesetzt. Der Rand des Abdeckteils 76 und das Ende 74 des Ventilkörpers 68 bilden das Verschließende des Ventilkörpers 68, mit dem dieser die Luftauslassöffnung 46 mehr oder weniger verschließt.

Der Ventilkörper 68 ist als (Kunststoff-)Spritzgussteil ausgebildet, was auch für die meisten der anderen Komponenten der Luftauslassvorrichtung 10 gilt. Der Ventilkörper 68 ist drehbar und axial verschiebbar im Halteelement 14 bzw. Düsenkörper 40 angeordnet. Zu diesem Zweck weist der Düsenkörper 40 drei radial abstehende Stege 78 auf, die an ihren dem Ventilkörper 68 abgewandten Ende mittels eines Rings 80 untereinander verbunden sind. Dieser Ring 80 trägt an seiner Außenseite ein Außengewinde 81, das mit dem segmentierten Innengewinde 38 des kugelförmigen Halteelements 14 in Eingriff steht. Die Stege 78 und der Ring 80 bilden zusammen ein Kopplungsteil 82, über das der Ventilkörper 68 sowohl mit dem Halteelement 14 als auch mit dem Düsenkörper 40 mechanisch gekoppelt ist. Letzteres erfolgt dadurch, dass im Hülsenteil 60 axiale Aufnahmeschlitze 83 ausgebildet sind, in die die Stege 78 eingetaucht sind. Die Anzahl der Stege 78 und der axialen Aufnahmeschlitze 83 beträgt jeweils drei, wobei auch andere Anzahlen möglich sind. Durch die axialen Aufnahmeschlitze 83 wird der Ventilkörper 68 über das Kopplungsteil 82 mitgedreht, wenn das Hülsenteil 60 gedreht wird. Auf Grund des Gewindeeingriffs von Kopplungsteil 82 und Halteelement 14 bewegt sich damit der Ventilkörper 68 axial innerhalb des Düsenkörpers 40.

Wie bereits oben ausgeführt, sind der Ventilkörper 68 und das Kopplungsteil 82 als ein Kunststoff-Spritzgussteil ausgebildet. Der Angussansatz 84 dieses Spritzgussteils befindet sich innerhalb einer sphärischen Vertiefung 86 am geschlossenen Ende 73 des Ventilkörpers 68. Dieses Ende 73 ist darüber hinaus halbkugelförmig, d.h. gerundet ausgebildet, was strömungstechnisch von Vorteil ist, und zwar sowohl im Hinblick auf mögliche Geräuschentwicklung als auch auf den Strömungswiderstand. Ebenfalls aus strömungstechnischen Gründen ist an dem der Aufnahmeöffnung 36 abgewandten Ende des kugelförmigen Halteelements 14 in dieses ein Strömungsleitelement in Form eines Leitringes 88 eingesetzt, dessen Innenseite mit der Innenseite 62 des Hülsenteils 60 im wesentlichen fluchtet und dessen der Luftströmung zugewandte Seite 90 konvex gerundet ist. Dieser Leitring überdeckt den Zwischenraum zwischen dem kugelförmigen Halteelement 14 und dem Düsenkörper 40.

Abschließend sei noch darauf hingewiesen, dass sich zwischen den Stegen 78 und einem Außenanschlagsring 92 des Hülsenteils 60 eine Schraubendruckfeder 94 befindet, die der zuverlässigen Beibehaltung der augenblicklichen Lage des Ventilkörpers 68 innerhalb des Düsenkörpers 40 dient.

## Patentansprüche

1. Luftauslassvorrichtung für ein Fahrzeug, insbesondere für ein Flugzeug, mit
- einem Düsenkörper (40) mit einer Lufteinlassöffnung (44) und einer Luftauslassöffnung (46),
- einem Halteelement (14) mit einer Aufnahmeöffnung (36), in der der Düsenkörper (40) um eine durch die Luftauslassöffnung (46) und die Lufteinlassöffnung (44) verlaufende Längsachse (42) drehbar gelagert ist, und
- einem koaxial im Düsenkörper (40) angeordneten und am Halteelement (14) geführten Ventilkörper (68), der bei Drehung des Düsenkörpers (40) in diesem zwischen einer die Luftauslassöffnung (46) versperrenden Schließposition und einer die Luftauslassöffnung (46) maximal freigebenden Maximalöffnungsposition verschiebbar ist,
**dadurch gekennzeichnet,**
- **dass** der Ventilkörper (68) hohl ausgebildet ist und
- **dass** der Ventilkörper (68) an seinem der Luftauslassöffnung (46) des Düsenkörpers (40) zugewandten Verschießende (74) mit einem Abdeckteil (76) versehen ist.

2. Luftauslassvorrichtung nach Anspruch 1, **dadurch gekennzeichnet, dass** der Ventilkörper (68) ein in Führungseingriff mit dem Halteelement (14) stehendes Kopplungsteil (82) aufweist, das von dem Düsenkörper (40) bei dessen Drehung mitnehmbar ist.

3. Luftauslassvorrichtung nach Anspruch 2, **dadurch gekennzeichnet, dass** das Kopplungsteil (82) einstückig mit dem Ventilkörper (68) ausgebildet ist.

4. Luftauslassvorrichtung nach Anspruch 3, **dadurch gekennzeichnet, dass** der Ventilkörper (68) und das Kopplungsteil (82) als einstückiges Spritzgussteil ausgebildet sind.

5. Luftauslassvorrichtung nach einem der Ansprüche 2 bis 4, **dadurch gekennzeichnet, dass** das Kopplungsteil (82) von dem Ventilkörper (68) abstehende, insbesondere stromlinienförmig ausgestaltete Stege (78) und einen diese untereinander verbindenden Ring (80) aufweist und dass sich die Stege (78) des Kopplungsteils (82) durch zur Lufteinlassöffnung (44) des Düsenkörpers (40) hin offene Aufnahmeschlitze (83) des Düsenkörpers (40) erstrecken, wobei der Ring (80) des Kopplungsteils (82) außerhalb des Düsenkörpers (40) angeordnet ist.

6. Luftauslassvorrichtung nach einem der Ansprüche 2 bis 5, **dadurch gekennzeichnet, dass** das Kopplungsteil (82) ein Außengewinde (81) und das Halteelement (14) ein Innengewinde (39) aufweist, wobei das Innengewinde (39) des Halteelements (14) in Umfangserstreckung voneinander beabstandete Teilsegmente (38) aufweist.

7. Luftauslassvorrichtung nach einem der Ansprüche 1 bis 6, **dadurch gekennzeichnet, dass** der Ventilkörper (68) an seinem der Lufteinlassöffnung (44) des Düsenkörpers (40) zugewandten Ende (73) abgerundet ausgebildet ist.

8. Luftauslassvorrichtung nach Anspruch 7, **dadurch gekennzeichnet, dass** der Ventilkörper (68) im Bereich des Scheitelpunktes seines abgerundeten Endes (73) eine im wesentlichen sphärische Vertiefung (86) aufweist.

9. Luftauslassvorrichtung nach Anspruch 4 und 8 oder nach Anspruch 4 und 8 und einem der Ansprüche 5 bis 7, **dadurch gekennzeichnet, dass** der Ventilkörper (68) in der sphärischen Vertiefung (86) seines abgerundeten Endes (73) einen Angussansatz (84) aufweist.

10. Luftauslassvorrichtung nach einem der Ansprüche 1 bis 9, **dadurch gekennzeichnet, dass** das Halteelement (14) nach Art einer Hohlkugel ausgebildet ist und mit einer die Aufnahmeöffnung (36) für den Düsenkörper (40) aufweisenden zentralen Durchgangsaussparung (32) versehen ist.

11. Luftaustassvorrichtung nach einem der Ansprüche 1 bis 10, **dadurch gekennzeichnet, dass** der Düsenkörper (40) ein sich bis außerhalb des Halteelements (14) erstreckendes, manuell drehbares Betätigungsteil (48) und ein innerhalb des Halteelements (14) angeordnetes, mit dem Betätigungsteil (48) zur gemeinsamen Verdrehung mit diesem verbundenes Hülsenteil (60) aufweist.

12. Luftauslassvorrichtung nach Anspruch 11, **dadurch gekennzeichnet, dass** das Betätigungsteil (48) in einem sich außerhalb des Halteelements (14) befindlichen Betätigungsabschnitt (52) und das Hülsenteil (60) jeweils eine größere radiale Dimension aufweisen als die Aufnahmeöffnung (36) des Halteelements (14).

13. Luftauslassvorrichtung nach Anspruch 11 oder 12, **dadurch gekennzeichnet, dass** das Betätigungsteil (48) einen sich an den Betätigungsabschnitt (52) anschließenden Kragenabschnitt (54) aufweist, der sich durch die Aufnahmeöffnung (36) des Halteelements (14) in dieses hinein erstreckt und zumindest einen Teil der Innenseite (62) des Düsenkörpers (40) bildet, und dass das Hülsenteil (60) auf den Kragenabschnitt (54) aufsteckbar ist.

14. Luftauslassvorrichtung nach Anspruch 13, **dadurch gekennzeichnet, dass** das Hülsenteil (60) sich über den Kragenabschnitt (54) des Betätigungsteils (48) hinaus in das Halteelement (14) erstreckt und in diesem Teil die Innenseite (62) des Düsenkörpers (40) bildet.

15. Luftauslassvorrichtung nach einem der Ansprüche 11 bis 14, **dadurch gekennzeichnet, dass** die Innenseite (62) des Düsenkörpers (40) im wesentlichen zylindrisch ist.

16. Luftauslassvorrichtung nach einem der Ansprüche 1 bis 15, **dadurch gekennzeichnet, dass** der Düsenkörper (40) eine Aufnahmenut (66) aufweist, in die das Halteelement (14) mit seinem die Aufnahmeöffnung (36) für den Düsenkörper (40) begrenzenden Rand eingetaucht ist.

17. Luftauslassvorrichtung nach Anspruch 16 oder nach Anspruch 16 und einem der Ansprüche 11 bis 15, **dadurch gekennzeichnet, dass** die Aufnahmenut (66) durch gegenüberliegende Flächen (58,64) des Betätigungsteils (48) und des Hülsenteils (60) begrenzt ist.

## Claims

1. An air outlet device for a vehicle, especially for an aircraft, comprising
- a nozzle body (40) with an air intake opening (44) and an air outlet opening (46),
- a holding element (14) formed with an accommodating opening (36) having the nozzle body (40) supported therein for rotation about a longitudinal axis (42) extending through the air outlet opening (46) and the air intake opening (44), and
- a valve body (68), arranged coaxially within the nozzle body (40) and guided by the holding element (14), which valve body (68) upon rotation of the nozzle body (40) can be displaced in the nozzle body (40) between a closing position for blocking the air outlet opening (46) and a maximum opening position for clearing the air outlet opening (46) to the maximum extent,
**characterized in**
- **that** the valve body (68) is of a hollow configuration,
- the valve body (68) is provided, on its closing end (74) facing towards the air outlet opening (46) of the nozzle body (40), with a cover member (76).

2. The air outlet device according to claim 1, **characterized in that** the valve body (68) comprises a coupling member (82) being in guiding engagement with the holding element (14) and arranged to be taken along by the nozzle body (40) upon rotation of the same.

3. The air outlet device according to claim 2, **characterized in that** the coupling member (82) is formed in one piece with the valve body (68).

4. The air outlet device according to claim 3, **characterized in that** the valve body (68) and the coupling member (82) are formed as an integral injection-molded member.

5. The air outlet device according to any one of claims 2 to 4, **characterized in that** the coupling member (82) is provided with webs (78) projecting from the valve body (68) and particularly having a streamlined shape, and with a ring (80) connecting the webs to each other, and that the webs (78) of the coupling member (82) extend through receiving slots (83) of the nozzle body (40) which are open toward the air intake opening (44) of the nozzle body (40), the ring (80) of the coupling member (82) being arranged externally of the nozzle body (40).

6. The air outlet device according to any one of claims 2 to 5, **characterized in that** the coupling member (82) comprises an outer thread (81) and the holding element (14) comprises an inner thread (39), the inner thread (39) of the holding element (14) comprising partial segments (38) spaced from each other in the circumferential direction.

7. The air outlet device according to any one of claims 1 to 6, **characterized in that** the end (73) of the valve body (68) facing towards the air intake opening (44) of the nozzle body (40) is of a rounded shape.

8. The air outlet device according to claim 7, **characterized in that** the valve body (68), in the region of the apex of its rounded end (73), is formed with a substantially spherical deepened portion (86).

9. The air outlet device according to claims 4 and 8, or according to claims 4 and 8 and any one of claims 5 to 7, **characterized in that** the valve body (68) has a sprue cone (84) arranged within the spherical deepened portion (86) of its rounded end (73).

10. The air outlet device according to any one of claims 1 to 9, **characterized in that** the holding element (14) is of a hollow spherical shape and comprises a central through passage (32) provided with the accommodating opening (36) for the nozzle body (40).

11. The air outlet device according to any one of claims 1 to 10, **characterized in that** the nozzle body (40) comprises an operating member (48) to be manually turned for adjustment and extending to a position external of the holding element (14), and a sleeve member (60) arranged within the holding element (14) and connected to the operating member (48) for common rotation therewith.

12. The air outlet device according to claim 11, **characterized in that** the operating member (48) in the region of an operation portion (52) arranged externally of the holding element (14), and the sleeve member (60) each have a larger radial dimension than the accommodating opening (36) of the holding element (14).

13. The air outlet device according to claim 11 or 12, **characterized in that** the operating member (48) comprises a collar portion (54) joining the operation portion (52) while extending through the accommodating opening (36) of the holding element (14) into the holding element (14) and forming at least a part of the inner side (62) of the nozzle body (40), and that the sleeve member (60) is configured to be mounted on the collar portion (54).

14. The air outlet device according to claim 13, **characterized in that** the sleeve member (60) extends beyond the collar portion (54) of the operating member (48) into the holding element (14) and in this region forms the inner side (62) of the nozzle body (40).

15. The air outlet device according to any one of claims 11 to 14, **characterized in that** the inner side (62) of the nozzle body (40) is substantially cylindrical.

16. The air outlet device according to any one of claims 1 to 15, **characterized in that** the nozzle body (40) comprises a receiving groove (66) with the holding element (14) immersed therein by its edge delimiting the accommodating opening (36) for the nozzle body (40).

17. The air outlet device according to claim 16, or according to claim 16 and any one of claims 11 to 15, **characterized in that** the receiving groove (66) is delimited by confronting surfaces (58,64) of the operating member (48) and the sleeve member (60).

## Revendications

1. Dispositif de sortie d'air pour un véhicule, en particulier pour un aéronef, comprenant
- un corps de buse (40) avec une ouverture d'entrée d'air (44) et une ouverture de sortie d'air (46),
- un élément de retenue (14) avec une ouverture de logement (36), dans lequel le corps de buse (40) est logé de façon à pouvoir tourner autour d'un axe longitudinal (42) agencé à travers l'ouverture de sortie d'air (46) et l'ouverture d'entrée d'air (44), et
- un corps de soupape (68) disposé de façon coaxiale dans le corps de buse (40) et guidé sur l'élément de retenue (14), qui, lors de la rotation du corps de buse (40), peut coulisser dans celui-ci entre une position de fermeture bloquant l'ouverture de sortie d'air (46) et une position d'ouverture maximale libérant au maximum l'ouverture de sortie d'air (46),
**caractérisé en ce que**
- le corps de soupape (68) est conçu de façon creuse et
- **en ce que** le corps de soupape (68) est pourvu d'une partie de recouvrement (76) sur son extrémité de fermeture (74) tournée vers l'ouverture de sortie d'air (46) du corps de buse (40).

2. Dispositif de sortie d'air selon la revendication 1, **caractérisé en ce que** le corps de soupape (68) présente une partie d'accouplement (82) en engagement de guidage avec l'élément de retenue (14), qui peut être entraînée par le corps de buse (40) lors de sa rotation.

3. Dispositif de sortie d'air selon la revendication 2, **caractérisé en ce que** la partie d'accouplement (82) est conçue d'une seule pièce avec le corps de soupape (68).

4. Dispositif de sortie d'air selon la revendication 3, **caractérisé en ce que** le corps de soupape (68) et la partie d'accouplement (82) sont conçus comme une partie moulée par injection d'une seule pièce.

5. Dispositif de sortie d'air selon l'une quelconque des revendications 2 à 4, **caractérisé en ce que** la partie d'accouplement (82) présente des barrettes (78) débordant du corps de soupape (68) et conçues en particulier avec une forme de ligne de courant et une bague (80) reliant ces barrettes entre elles et **en ce que** les barrettes (78) de la partie d'accouplement (82) s'étendent à travers des fentes de réception (83), ouvertes en direction de l'ouverture d'entrée d'air (44), du corps de buse (40), la bague (80) de la partie d'accouplement (82) étant disposée à l'extérieur du corps de buse (40).

6. Dispositif de sortie d'air selon l'une quelconque des revendications 2 à 5, **caractérisé en ce que** la partie d'accouplement (82) présente un filetage extérieur (81) et l'élément de retenue (14) un filetage intérieur (39), le filetage intérieur (39) de l'élément de retenue (14) présentant des segments partiels (38) espacés les uns des autres dans l'étirement périphérique.

7. Dispositif de sortie d'air selon l'une quelconque des revendications 1 à 6, **caractérisé en ce que** le corps de soupape (68) est conçu de façon arrondie sur son extrémité (73) tournée vers l'ouverture d'entrée d'air (44) du corps de buse (40).

8. Dispositif de sortie d'air selon la revendication 7, **caractérisé en ce que** le corps de soupape (68) présente dans la zone du sommet de son extrémité (73) arrondie une cavité (86) sensiblement sphérique.

9. Dispositif de sortie d'air selon les revendications 4 et 8 ou selon les revendications 4 et 8 et l'une des revendications 5 à 7, **caractérisé en ce que** le corps de soupape (68) présente une embase d'injection (84) dans la cavité (86) sphérique de son extrémité (73) arrondie.

10. Dispositif de sortie d'air selon l'une quelconque des revendications 1 à 9, **caractérisé en ce que** l'élément de retenue (14) est conçu à la façon d'une boule creuse et est pourvu d'un évidement de traversée (32) central présentant l'ouverture de réception (36) pour le corps de buse (40).

11. Dispositif de sortie d'air selon l'une quelconque des revendications 1 à 10, **caractérisé en ce que** le corps de buse (40). présente une partie d'actionnement (48) pouvant tourner manuellement et s'étendant à l'extérieur de l'élément de retenue (14) et une partie de manchon (60) disposée à l'intérieur de l'élément de retenue (14) et reliée à la partie d'actionnement (48) pour la rotation commune avec cette partie.

12. Dispositif de sortie d'air selon la revendication 11, **caractérisé en ce que** la partie d'actionnement (48) dans une partie d'actionnement (52) se trouvant à l'extérieur de l'élément de retenue (14) et la partie de manchon (60) présentent respectivement une dimension radiale plus grande que l'ouverture de réception (36) de l'élément de retenue (14).

13. Dispositif de sortie d'air selon la revendication 11 ou 12, **caractérisé en ce que** la partie d'actionnement (48) présente une partie de col (54) se raccordant à la partie d'actionnement (52), qui s'étend à travers l'ouverture de réception (36) de l'élément de retenue (14) à l'intérieur de celui-ci et forme au moins une partie du côté intérieur (62) du corps de buse (40), et **en ce que** la partie de manchon (60) peut être emboîtée sur la partie de col (54).

14. Dispositif de sortie d'air selon la revendication 13, **caractérisé en ce que** la partie de manchon (60) s'étend au-delà de la partie de col (54) de la partie d'actionnement (48) dans l'élément de retenue (14) et forme dans cette partie le côté intérieur (62) du corps de buse (40).

15. Dispositif de sortie d'air selon l'une quelconque des revendications 11 à 14, **caractérisé en ce que** le côté intérieur (62) du corps de buse (40) est sensiblement cylindrique.

16. Dispositif de sortie d'air selon l'une quelconque des revendications 1 à 15, **caractérisé en ce que** le corps de buse (40) présente une rainure de réception (66), dans laquelle l'élément de retenue (14) est plongé avec son bord délimitant l'ouverture de réception (36) pour le corps de buse (40).

17. Dispositif de sortie d'air selon la revendication 16 ou selon la revendication 16 et l'une quelconque des revendications 11 à 15, **caractérisé en ce que** la rainure de logement (66) est délimitée par des surfaces (58, 64) se faisant face de la partie d'actionnement (48) et la partie de manchon (60).
